(19) Europäisches Patentamt
European Patent Office
Office européen des brevets

(11) Veröffentlichungsnummer : **0 465 939 B1**

# (12) EUROPÄISCHE PATENTSCHRIFT

(45) Veröffentlichungstag der Patentschrift : **16.03.94 Patentblatt 94/11**

(51) Int. Cl.[5] : **C09B 62/09,** D06P 3/10, D06P 3/66

(21) Anmeldenummer : **91110634.2**

(22) Anmeldetag : **27.06.91**

## (54) Verdoppelte Reaktivfarbstoffe mit vier Halogentriazinankern.

(30) Priorität : **07.07.90 DE 4021727**

(43) Veröffentlichungstag der Anmeldung : **15.01.92 Patentblatt 92/03**

(45) Bekanntmachung des Hinweises auf die Patenterteilung : **16.03.94 Patentblatt 94/11**

(84) Benannte Vertragsstaaten : **CH DE FR GB IT LI**

(56) Entgegenhaltungen :
**FR-A- 1 439 996**
**FR-A- 2 297 899**

(56) Entgegenhaltungen :
**CHEMICAL ABSTRACTS, vol. 89, no. 14, 2. Oktober 1978, Columbus, Ohio, US; abstract no. 112326E, S.TAKAHASHI ET AL. 'Reactive dyes containing four triazine rings ' Seite 155 ;**
**CHEMICAL ABSTRACTS, vol. 87, no. 6, 8. August 1977, Columbus, Ohio, US; abstract no. 40684D, S. TAKAHASHI ET AL. 'dyeing of cellulosic fibers ' Seite 61 ;**

(73) Patentinhaber : **BASF Aktiengesellschaft**
**Carl-Bosch-Strasse 38**
**D-67063 Ludwigshafen (DE)**

(72) Erfinder : **Loeffler, Hermann**
**Haydnstrasse 23**
**W-6720 Speyer (DE)**
Erfinder : **Patsch, Manfred, Dr.**
**Fritz-Wendel-Strasse 4**
**W-6706 Wachenheim (DE)**
Erfinder : **Krallmann, Reinhold**
**Bachweg 2**
**W-6719 Weisenheim (DE)**

EP 0 465 939 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Azoreaktivfarbstoffe der Formel I

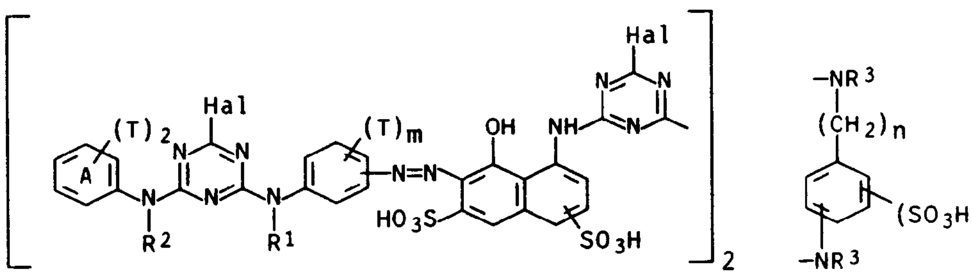

(I),

in der

m 0, 1 oder 2,

n 0 oder 1,

p 0 oder 1,

$R^1$ und $R^2$ gleich oder verschieden sind und unabhängig voneinander jeweils Wasserstoff, $C_1$-$C_4$-Alkyl, das gegebenenfalls durch Hydroxy, $C_1$-$C_4$-Alkoxy, Halogen, Cyano, Carboxyl oder Hydroxysulfonyl substituiert ist,

$R^3$ Wasserstoff, Methyl oder Ethyl,

T Carboxyl oder Hydroxysulfonyl und

Hal Fluor oder Chlor bedeuten und

der Ring A benzoanelliert und/oder durch $C_1$-$C_4$-Alkyl, $C_1$-$C_4$-Alkoxy oder Halogen substituiert sein kann, sowie die Verwendung der neuen Farbstoffe zum Färben oder Bedrucken von Hydroxygruppen oder Stickstoff enthaltenden Substraten.

Die neuen Azoreaktivfarbstoffe der Formel I sind in Form der freien Säuren angegeben. Selbstverständlich sind jedoch auch ihre Salze, insbesondere ihre Alkalisalze, mitumfaßt.

Aus der JP-A-27 628/1978 sowie der DE-A-3 135 432 sind Reaktivfarbstoffe bekannt, die denen der Formel I ähnlich sind. Sie unterscheiden sich jedoch entweder im Brückenglied, das die beiden Chromophorreste verbindet, oder in der Anzahl der Hydroxysulfonylgruppen.

Es hat sich gezeigt, daß diese Farbstoffe noch anwendungstechnische Mängel aufweisen.

Die ältere EP-A-387 579 hat ähnliche Azoreaktivfarbstoffe zum Gegenstand. Sie unterscheiden sich jedoch entweder in der Anzahl oder in der Stellung der Hydroxysulfonylgruppen.

Aufgabe der vorliegenden Erfindung war es nun, neue Azoreaktivfarbstoffe bereitzustellen, die vorteilhafte Eigenschaften, insbesondere eine hohe ixierausbeute sowie hohe Napechtheiten, aufweisen. Auperdem sollten die neuen Farbstoffe bei Raumtemperatur, z.B. im sogenannten Kaltverweilverfahren, unter Praxisbedingungen ausreichend schnell fixieren.

Demgemäß wurden die eingangs näher bezeichneten Azoreaktivfarbstoffe der Formel I gefunden.

Alle in der obengenannten Formel I auftretenden Alkylgruppen können sowohl geradkettig als auch verzweigt sein.

Wenn der Ring A benzoanelliert ist, sind erfindungsgemäß auch solche Azoreaktivfarbstoffe umfaßt, in denen einer oder beide Substituenten T sich am anellierten Benzoring befinden.

Reste $R^1$ und $R^2$ sind z.B. Methyl, Ethyl, Propyl, Isopropyl, Butyl, Isobutyl, sec-Butyl, 2-Hydroxyethyl, 2- oder 3-Hydroxypropyl, 2- oder 4-Hydroxybutyl, 2-Methoxyethyl, 2- oder 3-Methoxypropyl, 2- oder 4-Methoxybutyl, 2-Ethoxyethyl, 2- oder 3-Ethoxypropyl, 2- oder 4-Ethoxybutyl, 2-Chlorethyl, 2- oder 3-Chlorpropyl, 2- oder 4-Chlorbutyl, 2-Cyanoethyl, 3-Cyanopropyl, 4-Cyanobutyl, 2-Hydroxysulfonylethyl, 3-Hydroxysulfonylpropyl, 4-Hydroxysulfonylbutyl, 2-Carboxyethyl, 3-Carboxypropyl oder 4-Carboxybutyl.

Geeignete Diazokomponenten, von denen sich der Rest

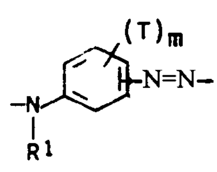

ableitet, sind z.B. 1,3-Diaminobenzol, 2,4-Diaminobenzolsulfonsäure, 2,5-Diaminobenzolsulfonsäure, 2,4-Diaminobenzoesäure, 2,4-Diaminobenzol-1,5-disulfonsäure oder 2,5-Diaminobenzol-1,4-disulfonsäure.

Reste der Kupplungskomponente der Formel

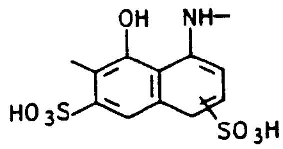

sind beispielsweise

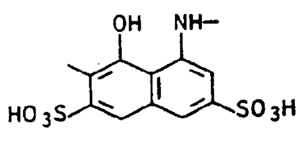 oder 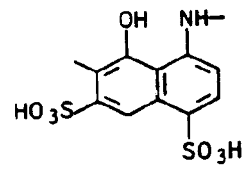 .

Die Reste

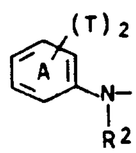

leiten sich beispielsweise von Anilin-2,4-disulfonsäure, N-Methyl- oder N-Ethylanilin-2,4-disulfonsäure, Anilin-2,5-disulfonsäure, N-Methyl- oder N-Ethylanilin-2,5-disulfonsäure, 2-Amino-4-hydroxysulfonylbenzoesäure, 2-Amino-5-hydroxysulfonylbenzoesäure, 2-Methylamino- oder 2-Ethylamino-5-hydroxysulfonylbenzoesäure, 4-Chloranilin-2,5-disulfonsäure, 3-Chloranilin-4,6-disulfonsäure, 2-Chloranilin-4,5-disulfonsäure, 4-Aminotoluol-2,5-disulfonsäure, 3-Aminophthalsäure, 4-Aminophthalsäure, Aminoterephthalsäure, 1-Aminonaphthalin-3,6- oder -3,8-disulfonsäure, 1-Aminonaphthalin-4,7-disulfonsäure oder 2-Aminonaphthalin-1,5-, -3,6- oder -6,8-disulfonsäure ab.

Geeignete Reste

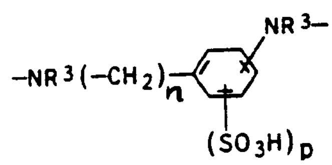

leiten sich beispielsweise von folgenden Diaminen ab:

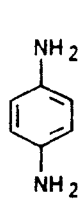 , 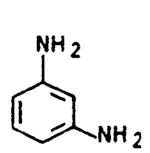 , 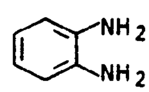 , 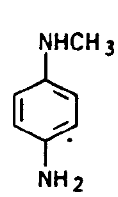 , 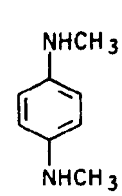

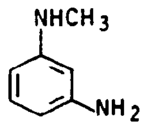 , 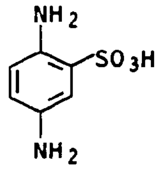 , 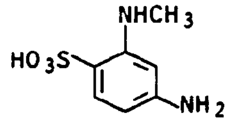 , 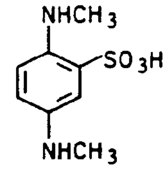

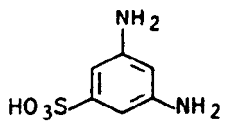 , 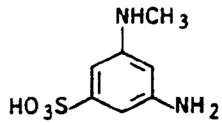 , 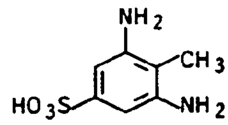

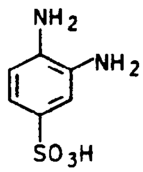 oder 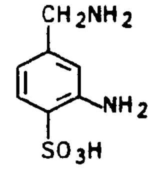 .

Hervorzuheben sind Azoreaktivfarbstoffe der Formel I, in der sich der Rest

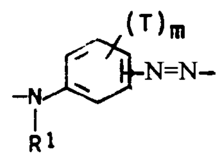

von folgenden Diazokomponenten ableitet:

2,4-Diaminobenzolsulfonsäure, 2,5-Diaminobenzolsulfonsäure oder 2,4-Diaminobenzol-1,5-disulfonsäure.

Hervorzuheben sind weiterhin Azoreaktivfarbstoffe der Formel I, in der der Ring A nicht benzoanelliert ist.

Hervorzuheben sind weiterhin Azoreaktivfarbstoffe der Formel I, in der der Rest der Kupplungskomponente die Formel

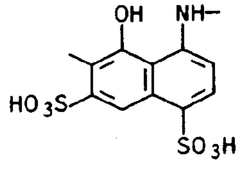

aufweist.

Hervorzuheben sind weiterhin Azoreaktivfarbstoffe der Formel I, in der die Summe der Hydroxysulfonylreste oder der Hydroxysulfonyl- und Carboxylreste zusammen mindestens 10, vorzugsweise 10 oder 11, beträgt.

Von besonderem Interesse sind Azoreaktivfarbstoffe, die der Formel Ia

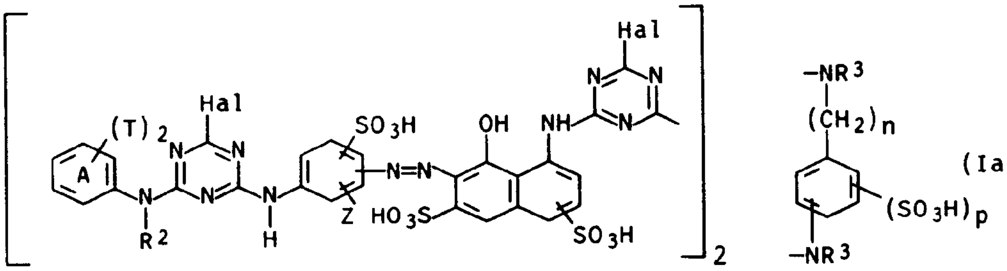

(Ia)

entsprechen, in der
$R^2$ Wasserstoff oder Methyl und
Z Wasserstoff oder Hydroxysulfonyl bedeuten und
n, p, T, $R^3$, Hal und der Ring A jeweils die obengenannte Bedeutung besitzen.

Insbesondere zu nennen sind Azoreaktivfarbstoffe, die der Formel Ib

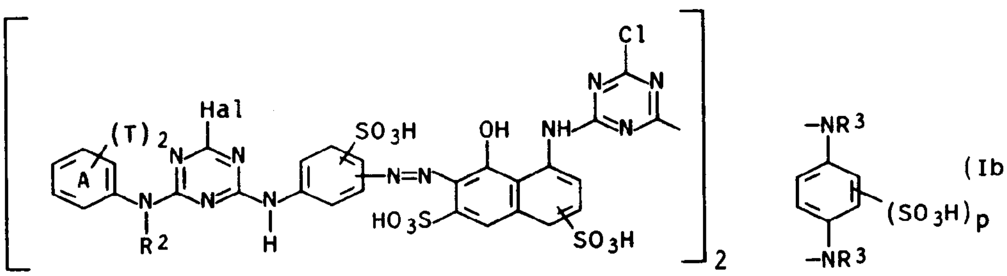

(Ib)

entsprechen, in der
$R^2$ Wasserstoff oder Methyl bedeuten und
der Ring A durch Chlor oder Methyl subsituiert sein kann und
p, T, Hal und $R^3$ jeweils die obengenannte Bedeutung besitzen.

Von besonderem technischen Interesse sind Azoreaktivfarbstoffe, die der Formel Ic

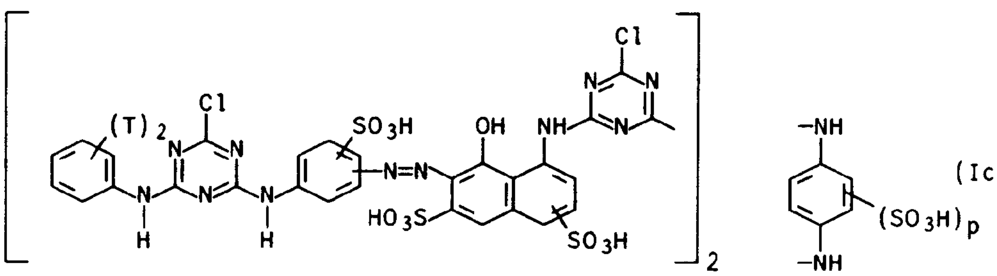

(Ic)

entsprechen, in der
T und p jeweils die obengenannte Bedeutung besitzen.

Die Herstellung der neuen Azoreaktivfarbstoffe der Formel I erfolgt nach an sich bekannten Methoden. Beispielsweise kann man

a) ein Amin der Formel II

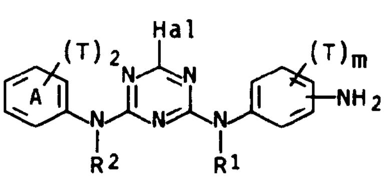

(II),

in der m, Hal, T, $R^1$, $R^2$ und der Ring A jeweils die obengenannte Bedeutung besitzen, diazotieren und mit

einer Kupplungskomponente der Formel III

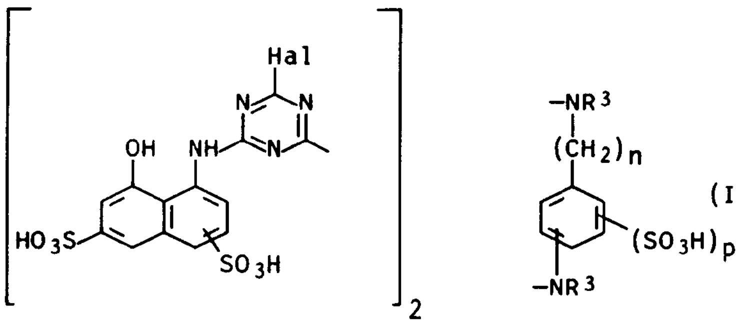

(III),

in der n, p, $R^3$ und Hal jeweils die obengenannte Bedeutung besitzen, kuppeln.

Eine weitere Methode besteht beispielsweise darin, daß man

b) ein Amin der Formel II diazotiert, mit einer Kupplungskomponente der Formel IV

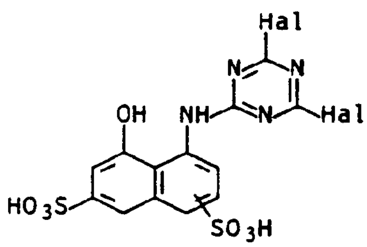

(IV),

in der Hal die obengenannte Bedeutung besitzt, kuppelt und anschließend mit einem Diamin der Formel V

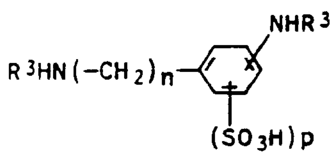

(V),

in der n, p und $R^3$ jeweils die obengenannte Bedeutung besitzen, umsetzt.

Eine weitere Methode besteht beispielsweise darin, daß man

c) ein Amin der Formel VI

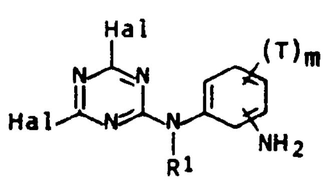

in der m, T, $R^1$ und Hal jeweils die obengenannte Bedeutung besitzen, diazotiert, mit einer Kupplungskomponente III kuppelt und anschließend noch mit einem Arylamin der Formel VII

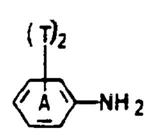

(VII),

in der T und der Ring A jeweils die obengenannte Bedeutung besitzen, umsetzt.

Bevorzugt werden die erfindungsgemäßen Farbstoffe nach der Methode a) hergestellt.

Die neuen Reaktivfarbstoffe der Formel I eignen sich in vorteilhafter Weise zum Färben oder Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle.

Dabei zeichnen sie sich durch eine niedrige Fixiertemperatur im sogenannten Ausziehverfahren und durch eine kurze Fixierzeit bei Raumtemperatur im sogenannten Kaltverweilverfahren aus. Außerdem werden die Mängel in der Waschechtheit, die die für solche Fixierbedingungen notwendigen Additionsanker-Farbstoffe sonst aufweisen, vermieden. Die Farbstärke, Fixierrate und Lichtechtheit der neuen Farbstoffe sind sehr hoch.

Die folgenden Beispiele sollen die Erfindung näher erläutern.

Beispiel 1

a) Die Lösung von 1,05 Mol 1-Amino-8-hydroxynaphthalin-4,6-disulfonsäure (als Dinatriumsalz) in 800 ml Wasser ließ man in eine Aufschlämmung von 216 g Cyanurchlorid in 2250 ml Eiswasser und 10 ml 30 gew-.%iger Salzsäure einfließen. Nach dreistündigem Rühren bei 0 bis 5°C war die Umsetzung beendet. Zur Dispersion wurden 54 g 1,4-Diaminobenzol eingestreut und unter gleichzeitiger Erwärmung auf Raumtemperatur durch Eindosieren von eiskalter, 20 gew.-%iger Natronlauge der pH-Wert auf 5 erhöht. Die Doppelkondensation wurde durch vierstündiges Rühren bei 35 bis 40°C unter Einhaltung des pH-Wertes von 5 vervollständigt. Das Tetranatriumsalz der Formel

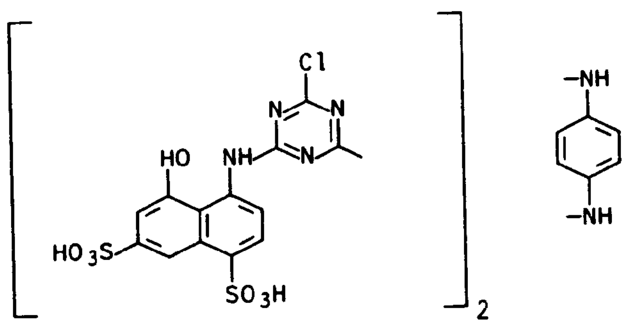

wurde aus der Lösung mit 1000 g Kochsalz gefällt, abgesaugt und mit 3 gew.-%iger Kochsalzlösung gewaschen. Die Rohausbeute betrug 88 % d.Th.

b) 0,05 Mol 2-(2,4-Dihydroxysulfonylphenylamino)-4-chlor-6-(3-amino-4-hydroxysulfonylphenylamino)-s-triazin wurden in 300 ml Eiswasser gelöst und durch Zugabe von 15 ml 3,33 n Natriumnitritlösung und 17 ml 30 gew.-%iger Salzsäure diazotiert. Nach einstündigem Rühren in der Eiskälte wurde der Salpetrigsäureüberschuß mit Amidosulfonsäure zerstört und die Dispersion des Diazoniumsalzes mit der Aufschlämmung von 0,024 Mol der binären Kupplungskomponente aus a) in 150 ml Wasser vermischt. Die Kupplung erfolgte durch Zusatz von 100 ml gesättigter Natriumacetatlösung und Natriumhydrogencarbonat bis zu einem pH-Wert von 6 und Rühren über Nacht bei Raumtemperatur. Die erhaltene Farbstoffsuspension die den roten Farbstoff der Formel:

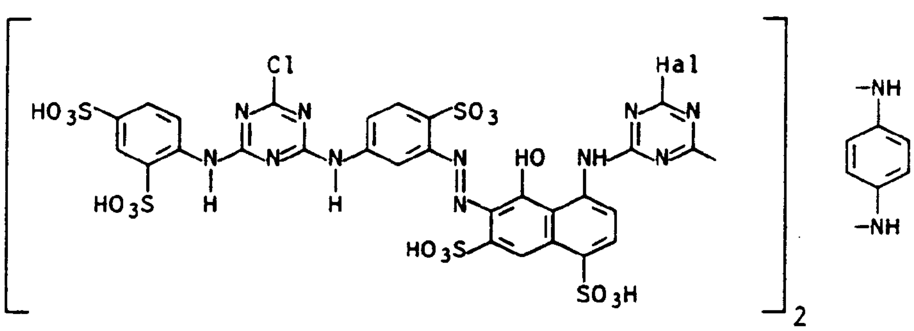

(λ max (Wasser): 514,1 nm)

als Dekanatriumsalz enthält, wurde abgesaugt, mit 3 gew.-%iger Kochsalzlösung und anschliepend mit

80 vol.-%igem wäßrigen Aceton gewaschen und bei Raumtemperatur unter vermindertem Druck getrocknet. Der Farbstoff färbt Cellulosematerialien sowohl nach dem Kaltverweilverfahren bei Raumtemperatur als auch nach dem Ausziehverfahren bei 60°C mit guter Fixierausbeute und Farbstärke in brillantem mittlerem Rot mit guter Lichtechtheit und guten Naßechtheiten.
In analoger Weise werden die in der folgenden Tabelle aufgeführten Farbstoffe der Formel

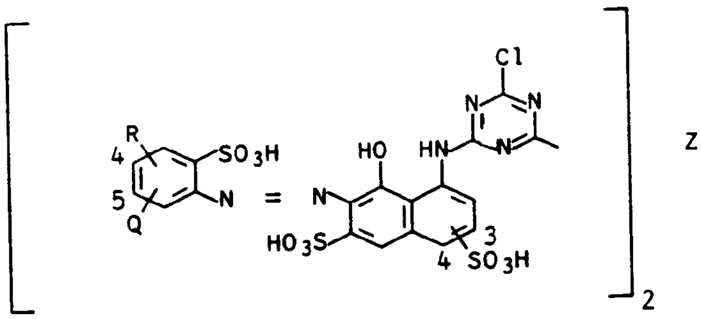

erhalten. Sie weisen ähnlich günstige Eigenschaften auf.

Tabelle

| Beispiel Nr. | Q | R | 3-/4-$SO_3H$ | Z | Farbton $\lambda_{max}$ [nm] in Wasser |
|---|---|---|---|---|---|
| 2 | 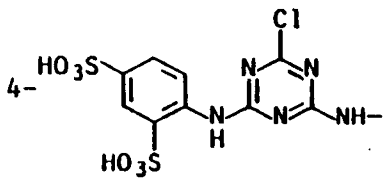 | H | 4 | 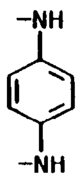 | violett 536 |
| 3 | 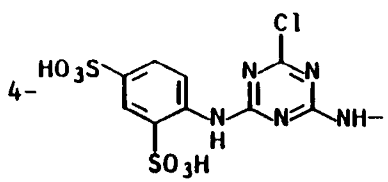 | H | 4 | 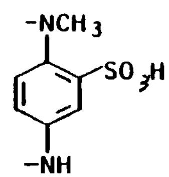 | violett 536 |
| 4 | 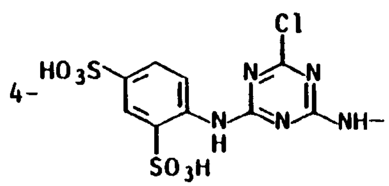 | H | 4 | 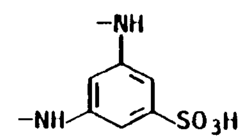 | violett 536 |
| 5 | 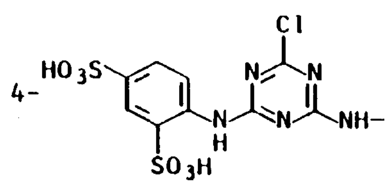 | H | 4 | 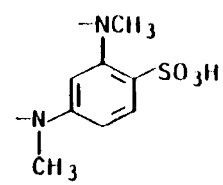 | violett 536 |

Tabelle (Forts.)

| Beispiel Nr. | | Q | R | 3-/4-$SO_3H$ | Z | Farbton $\lambda_{max}$ [nm] in Wasser |
|---|---|---|---|---|---|---|
| 6 | 4- | 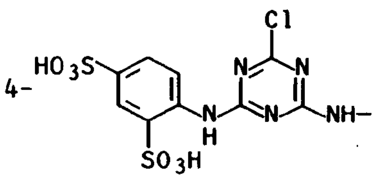 | H | 4 | 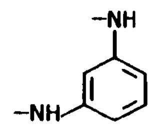 | violett 536 |
| 7 | 5- | 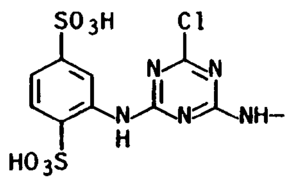 | H | 4 | 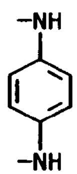 | mittelrot 514 |
| 8 | 5- | 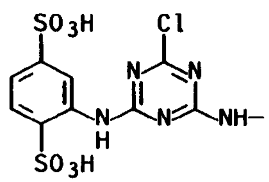 | H | 4 | 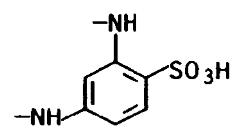 | mittelrot 512 |
| 9 | 5- | 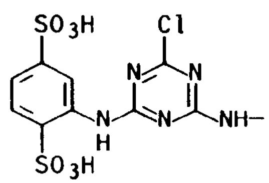 | H | 4 | 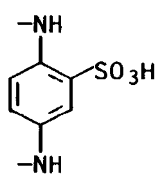 | mittelrot 513 |

Tabelle (Forts.)

| Beispiel Nr. | | Q | R | 3-/4-$SO_3H$ | Z | Farbton $\lambda_{max}$ [nm] in Wasser |
|---|---|---|---|---|---|---|
| 10 | 5- | 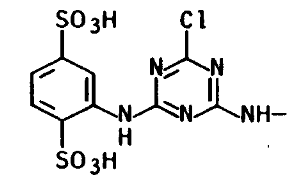 | H | 4 | 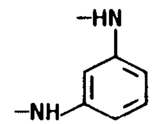 | mittelrot 512 |
| 11 | 5- | 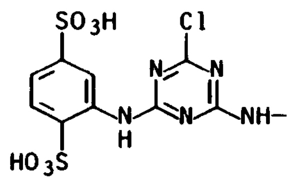 | H | 4 | 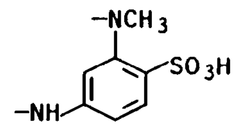 | mittelrot 511 |
| 12 | 5- | 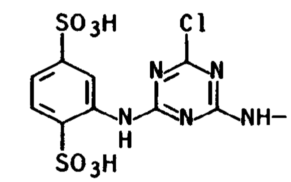 | H | 4 | 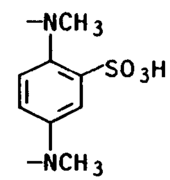 | mittelrot 514 |
| 13 | 5- | 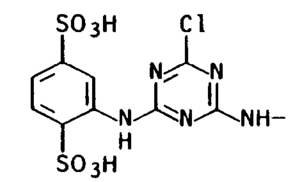 | H | 4 | 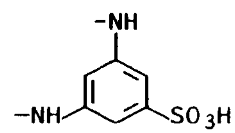 | mittelrot 513 |

Tabelle (Forts.)

| Beispiel Nr. | Q | R | 3-/4-$SO_3H$ | Z | Farbton $\lambda_{max}$ [nm] in Wasser |
|---|---|---|---|---|---|
| 14 | 5- 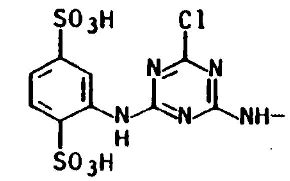 | H | 3 | 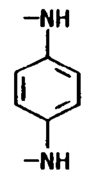 | neutralrot 515 |
| 15 | 5- 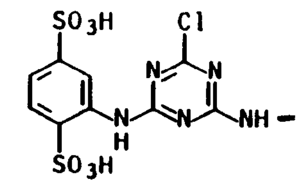 | H | 4 | 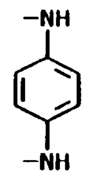 | violett 514 |
| 16 | 5- 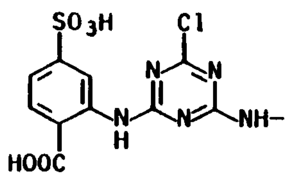 | H | 4 | 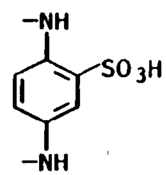 | mittelrot 513 |
| 17 | 4- 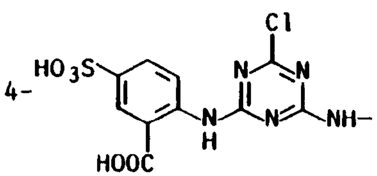 | H | 4 | 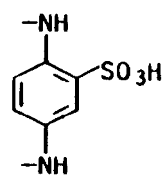 | mittelrot 513 |

Tabelle (Forts.)

| Beispiel Nr. | Q | R | 3-/4-$SO_3H$ | Z | Farbton $\lambda_{max}$ [nm] in Wasser |
|---|---|---|---|---|---|
| 18 | 4- 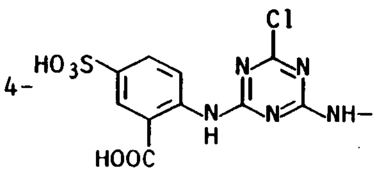 | H | 4 | 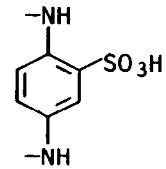 | violett 536 |
| 19 | 5- 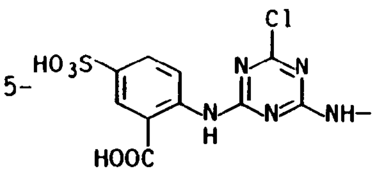 | H | 4 | 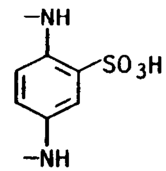 | mittelrot 512 |
| 20 | 5- 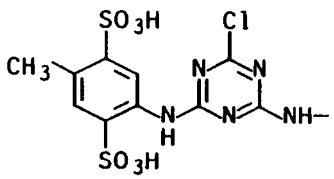 | H | 4 | 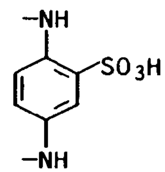 | mittelrot 513 |
| 21 | 4- 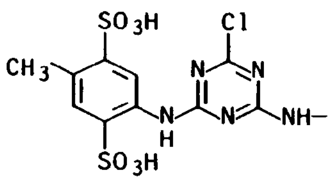 | H | 4 | 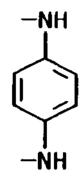 | violett 536 |

Tabelle (Forts.)

| Beispiel Nr. | Q | R | 3-/4-$SO_3H$ | Z | Farbton $\lambda_{max}$ [nm] in Wasser |
|---|---|---|---|---|---|
| 22 | 5- 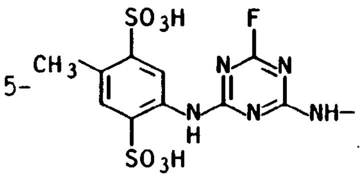 | H | 4 | 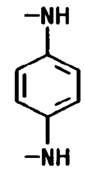 | mittelrot 515 |
| 23 | 5- 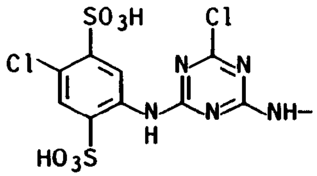 | H | 3 | 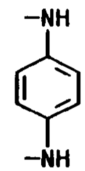 | mittelrot 515 |
| 24 | 4- 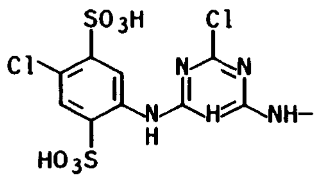 | H | 4 | 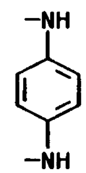 | violett 536 |
| 25 | 4- 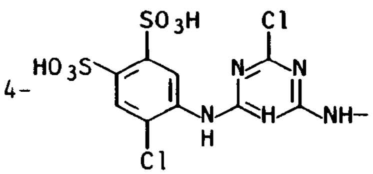 | H | 4 | 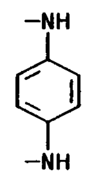 | violettot 536 |

Tabelle 1 (Forts.)

| Beispiel Nr. | Q | R | 3-/4-$SO_3H$ | Z | Farbton $\lambda_{max}$ [nm] in Wasser |
|---|---|---|---|---|---|
| 26 | 5- 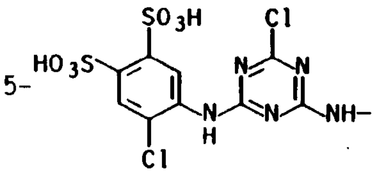 | H | 4 | 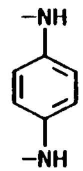 | mittelrot 514 |
| 27 | 5- 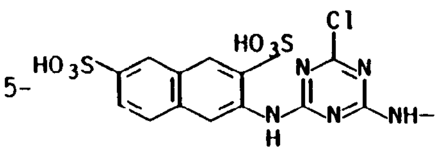 | H | 4 | 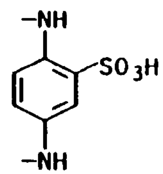 | mittelrot 513 |
| 28 | 5- 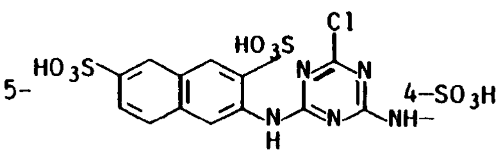 | 4-$SO_3H$ | 4 | 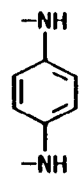 | mittelrot 513 |
| 29 | 4- 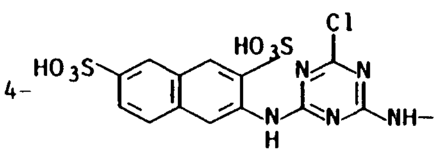 | H | 4 | 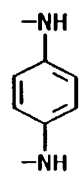 | violett 536 |

Tabelle (Forts.)

| Beispiel Nr. | | Q | R | 3-/4-$SO_3H$ | Z | Farbton $\lambda_{max}$ [nm] in Wasser |
|---|---|---|---|---|---|---|
| 30 | 4- | 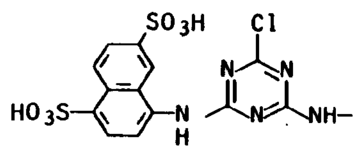 | H | 4 | 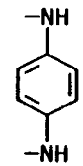 | violett 536 |
| 31 | 5- | 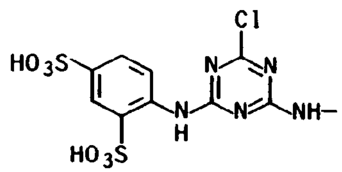 | H | 4 | 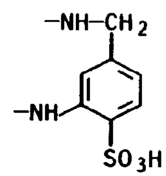 | mittelrot 510 |
| 32 | 4- | 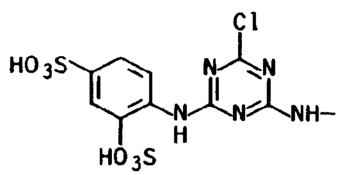 | H | 4 | 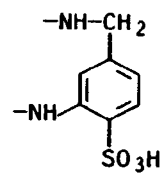 | violett 536 |
| 33 | 4- | 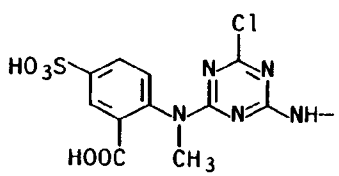 | H | 4 | 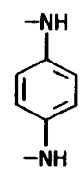 | violett 536 |

Tabelle (Forts.)

| Beispiel Nr. | | Q | R | 3-/4-$SO_3H$ | Z | Farbton $\lambda_{max}$ [nm] |
|---|---|---|---|---|---|---|
| 34 | 5- | 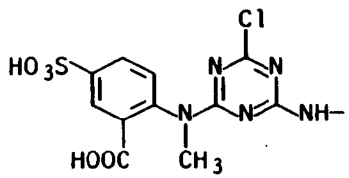 | H | 4 | 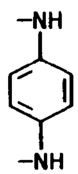 | mittelrot 510 |
| 35 | 5- | 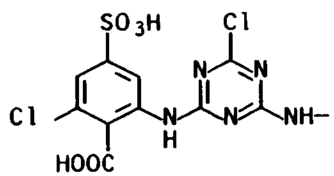 | H | 4 | 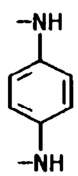 | mittelrot 513 |
| 36 | 4- | 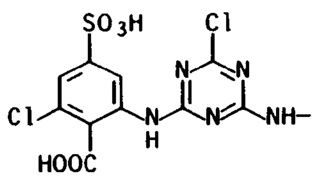 | H | 4 | 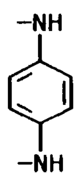 | violett 536 |

Beispiel 37

100 g eines Baumwollgarns wurden in einem Färbebad, das 1500 ml Wasser, 2,0 g des Farbstoffes aus Beispiel 1, 75 g Natriumsulfat und 30 g Soda enthielt, behandelt. Ab 30°C wurde die Temperatur innerhalb von 30 Minuten auf 60°C gesteigert und 60 Minuten bei diesem Wert gehalten.

Nach der üblichen Fertigstellung durch Spülen und kochendes Seifen erhielt man eine Färbung in klarem rotvioletten Ton mit ausgezeichneten Echtheitseigenschaften.

Beispiel 38

Ein Baumwollgewebe wurde auf einem Dreiwalzenfoulard bei Raumtemperatur mit einer Färbeflotte getränkt, die je 1000 g Flotte 16 g des Farbstoffes aus Beispiel 2, 100 g Natronwasserglas (38° Bé), 50 g Natronlauge (38° Bé) und 100 g Harnstoff enthielt.

Nach dem Imprägnieren unter 70 % Flottenaufnahme wurde das Gewebe aufgerollt und nach Umschließen mit einer Folie während 8 Stunden bei Raumtemperatur in feuchtem Zustand gelagert.

Nach der üblichen Fertigstellung durch Spülen und kochendes Seifen erhielt man eine farbstarke Färbung in brillantem Rotton mit sehr guten Echtheitseigenschaften.

## Patentansprüche

1. Azoreaktivfarbstoffe der Formel I

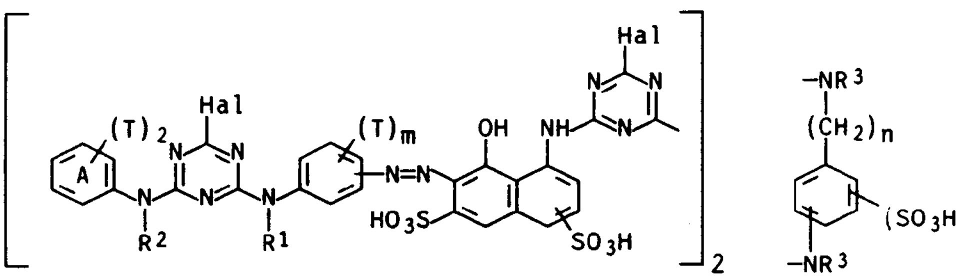

(I),

in der

| | |
|---|---|
| m | 0, 1 oder 2, |
| n | 0 oder 1, |
| p | 0 oder 1, |
| $R^1$ und $R^2$ | gleich oder verschieden sind und unabhängig voneinander jeweils Wasserstoff, $C_1$-$C_4$-Alkyl, das gegebenenfalls durch Hydroxy, $C_1$-$C_4$-Alkoxy, Halogen, Cyano, Carboxyl oder Hydroxysulfonyl substituiert ist, |
| $R^3$ | Wasserstoff, Methyl oder Ethyl, |
| T | Carboxyl oder Hydroxysulfonyl, |
| Hal | Fluor oder Chlor bedeuten und |

der Ring A benzoanelliert und/oder durch $C_1$-$C_4$-Alkyl, $C_1$-$C_4$-Alkoxy oder Halogen substituiert sein kann.

2. Azoreaktivfarbstoffe nach Anspruch 1, die der Formel Ia

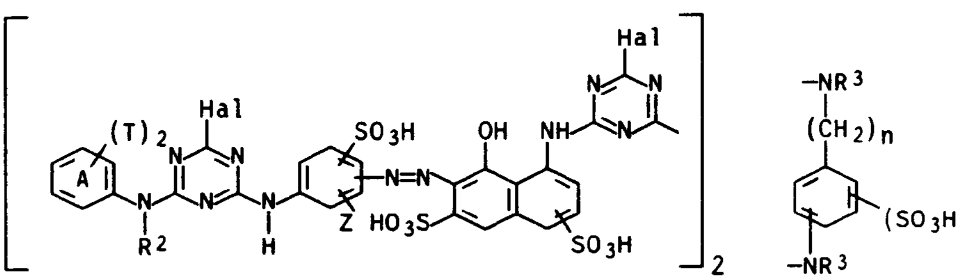

(Ia)

entsprechen, in der

$R^2$ Wasserstoff oder Methyl und
Z Wasserstoff oder Hydroxysulfonyl bedeuten und
n, p, T, $R^3$, Hal und der Ring A jeweils die in Anspruch 1 genannte Bedeutung besitzen.

3. Azoreaktivfarbstoffe nach Anspruch 1, die der Formel Ib

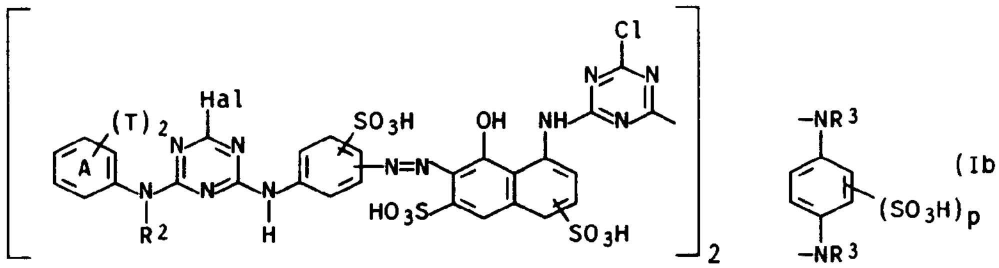

(Ib)

entsprechen, in der
$R^2$ Wasserstoff oder Methyl bedeuten und
der Ring A durch Chlor oder Methyl subsituiert sein kann und
p, T, Hal und $R^3$ jeweils die in Anspruch 1 genannte Bedeutung besitzen.

4. Verwendung der Azoreaktivfarbstoffe gemäß Anspruch 1 zum Färben oder Bedrucken von Hydroxygruppen oder Stickstoff enthaltenden Substraten.

## Claims

1. An azo class reactive dye of the formula I

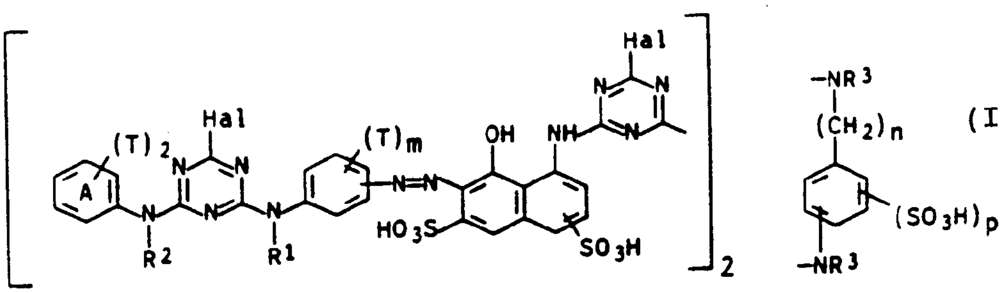

(I)

where

| | |
|---|---|
| m | is 0, 1 or 2, |
| n | is 0 or 1, |
| p | is 0 or 1, |
| $R^1$ and $R^2$ | are identical or different and each is independently of the other hydrogen or $C_1$-$C_4$-alkyl which may be substituted by hydroxyl, $C_1$-$C_4$-alkoxy, halogen, cyano, carboxyl or hydroxysulfonyl, |
| $R^3$ | is hydrogen, methyl or ethyl, |
| T | is carboxyl or hydroxysulfonyl, |
| Hal | is fluorine or chlorine, and |

the ring A may be benzofused or substituted by $C_1$-$C_4$-alkyl, $C_1$-$C_4$-alkoxy or halogen.

2. An azo class reactive dye as claimed in claim 1 of the formula Ia

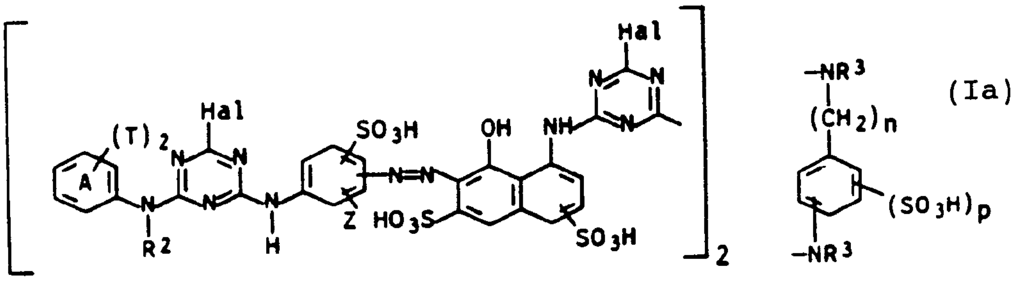

(Ia)

where
$R^2$ is hydrogen or methyl,
Z is hydrogen or hydroxysulfonyl, and
n, p, T, $R^3$, Hal and the ring A are each as defined in claim 1.

3. An azo class reactive dye as claimed in claim 1 of the formula Ib

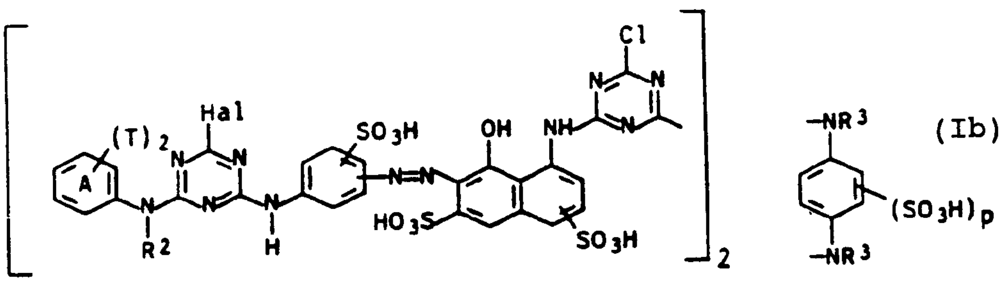

(Ib)

where
$R^2$ is hydrogen or methyl,
the ring A may be substituted by chlorine or methyl, and
p, T, Hal and $R^3$ are each as defined in claim 1.

4. The use for dyeing or printing a hydroxyl- or nitrogen-containing substrate of an azo class reactive dye as claimed in claim 1.

## Revendications

1. Colorants réactifs azoïques de formule I

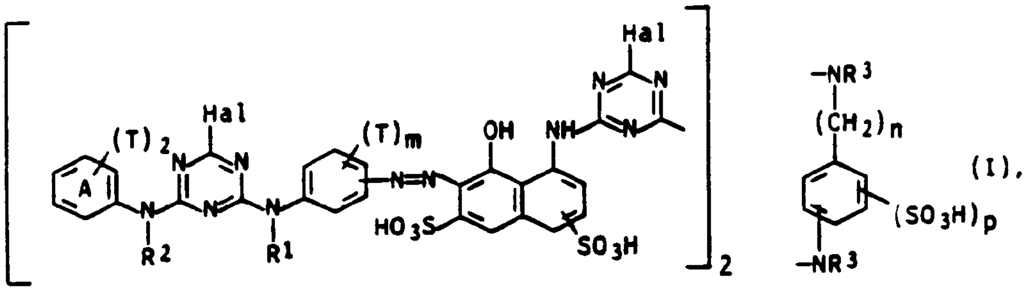

(I),

dans laquelle

| | |
|---|---|
| m | est 0, 1 ou 2, |
| n | est 0 ou 1, |
| p | est 0 ou 1, |
| $R^1$ et $R^2$ | sont identiques ou différents et représentent chacun indépendamment l'un de l'autre un |

atome d'hydrogène, un groupement alkyle en $C_1$-$C_4$, qui est éventuellement substitué par un groupement hydroxy, alcoxy en $C_1$-$C_4$, halogéno, cyano, carboxyle ou hydroxysulfonyle,

$R^3$ est un atome d'hydrogène, un groupe méthyle ou éthyle,

T est un groupe carboxyle ou hydroxysulfonyle,

Hal représente un atome de fluor ou de chlore et

le cycle A peut être condensé à un noyau benzénique et/ou substitué par un groupement alkyle en $C_1$-$C_4$, alcoxy en $C_1$-$C_4$ ou halogéno.

**2.** Colorants réactifs azoïques selon la revendication 1, correspondant à la formule Ia

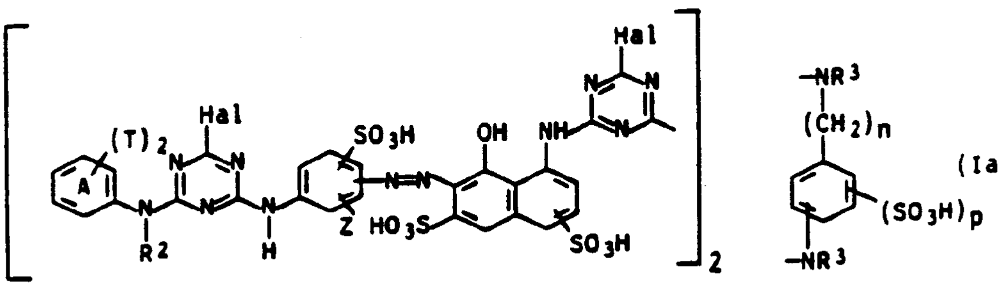

(Ia)

dans laquelle

$R^2$ représente un atome d'hydrogène ou un groupement méthyle et

Z représente un atome d'hydrogène ou un groupement hydroxysulfonyle et

n, p, T, $R^3$, Hal et le cycle A ont chaque fois la signification indiquée dans la revendication 1.

**3.** Colorants réactifs azoïques selon la revendication 1, correspondant à la formule Ib

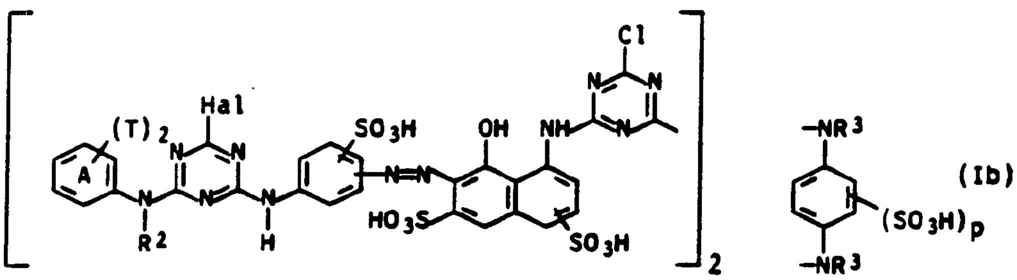

(Ib)

dans laquelle

$R^2$ représente un atome d' hydrogène ou un groupement méthyle et

le cycle A peut être substitué par un atome de chlore ou un groupement méthyle et

p, T, Hal et $R^3$ ont chacun la signification indiquée dans la revendication 1.

**4.** Utilisation des colorants réactifs azoïques selon la revendication 1 pour teindre ou imprimer des substrats contenant des groupements hydroxy ou de l'azote.